# EUROPÄISCHE PATENTANMELDUNG

(11) **EP 4 671 655 A1**
(43) Veröffentlichungstag der Anmeldung: **31.12.2025**
(21) Anmeldenummer: 24184580.9
(22) Anmeldetag: 26.06.2024
(51) Int. Cl.: F27B 7/38, C04B 7/47, F27D 15/02

(54) **VORRICHTUNG ZUM KÜHLEN VON HEISSEM SCHÜTTGUT, INSBESONDERE ZEMENTKLINKER, MIT EINEM KÜHLGAS**

(71) Anmelder: Claudius Peters Projects GmbH, 21614 Buxtehude (DE)
(72) Erfinder: Bock, Uwe, 21680 Stade (DE)
(74) Vertreter: Glawe, Delfs, Moll

(57) **Zusammenfassung**

Vorrichtung zum Kühlen von heißem Schüttgut, insbesondere Zementklinker. Kühlgas (80) aus einem in mehrere Kammern (41-46) unterteilten Rostunterraum (4) durchströmt einen Kühlrost (3), der eine Schüttgutschicht in Förderrichtung (14) transportiert. Die in Förderrichtung (14) hintereinander angeordneten Kammern (41-46) sind jeweils von einer eigenen zugeordneten Kühlgasversorgungseinheit (81-86) mit Kühlgas versorgt. Unmittelbar benachbarte Kammern sind durch eine Kammertrennwand (47) voneinander getrennt. Der Kühlrost (3) ist ein Förderrost mit mehreren nebeneinander angeordneten, in Förderrichtung vor- und zurückbewegten Planken (34), wobei wenigstens zwei benachbarte Planken (34) im Vorhub gleichzeitig und im Rückhub ungleichzeitig bewegt werden. Erfindungsgemäß hat eine Gruppe umfassend mindestens zwei Kammern zusätzlich eine Zweitversorgungseinheit (6) für Kühlgas, umfassend eine Überbrückungs-Gasführung (60), die im Normalbetrieb geschlossen ist und im Fehlerfall bei Ausfall der Kühlgasversorgungseinheit (81-86) von einer Kammer automatisch öffnet, so dass in diese Kammer Kühlgas einer der anderen Kammern der Gruppe einströmt. Damit wird eine Notkühlung der vom Ausfall betroffenen Kammer erreicht.

## Beschreibung

Die Erfindung betrifft eine Vorrichtung zum Kühlen von heißem Schüttgut, insbesondere Zementklinker, mittels eines Kühlgases. Die Vorrichtung umfasst einen eine Schicht des Schüttguts von einem Aufgabeende in eine Förderrichtung zu einem Abgabeende fördernden und von Kühlgas durchströmten Kühlrost, auf dem das zu kühlende Schüttgut aufliegt. Der Kühlrost umfasst mehrere in der Förderrichtung wechselnd um eine Hublänge vor- und zurückbewegte Planken, deren Antrieb so gesteuert ist, dass wenigstens zwei benachbarte Planken im Vorhub gleichzeitig und im Rückhub ungleichzeitig bewegt werden.

Derartige Kühlvorrichtungen dienen dazu, Schüttgut durch Gas zu kühlen, indem das Schüttgut als Bett auf einen Kühlrost aufgebracht und längs diesem transportiert wird, während zum Kühlen Gas von unterhalb des Kühlrostes zugeführt wird. Das Kühlgas, bei dem es sich typischerweise um Kühlluft aus dem Rostunterraum handelt, steigt durch den Kühlrost in das Schüttgutbett und kühlt dieses dabei. Dem Kühlrost kommen bei derartigen Kühlvorrichtungen in Bezug auf das Schüttgut drei Funktionen zu. Die eine Funktion ist das Stützen des Schüttguts zur Bildung eines Gutbetts, des Weiteren die Oberfläche zum Einbringen der Kühlluft und die weitere ist eine Transportfunktion zum Fördern des Schüttguts von einem Aufgabeende zu einem Abgabeende. Zur Realisierung der Funktionen sind verschiedene Grundbauarten bekannt geworden. Hier von Interesse ist die Bauart mit mehreren, sich in Förderrichtung erstreckenden Planken, die wechselweise vor- und zurückbewegt werden. Bei diesem Förderprinzip besteht eine Schwierigkeit darin, dass die Planken mit ihrer Oberfläche großen Belastungen ausgesetzt sind, nämlich wegen der meist anfänglich auftretenden hohen Temperatur des zu kühlenden Guts.

Zum Schutz der Plankenoberfläche vor der thermischen und abrasiven Beanspruchung durch das Schüttgut, was besonders relevant ist bei heißem Klinkermaterial als Schüttgut, das aus einem unmittelbar vorgeschalteten Brennofen austritt, ist aus der EP 1509737 B1 bekannt, die Planken eines solchen Kühlrosts mit einer Vielzahl von Mulden an der Oberfläche der Planken auszuführen. In den Mulden lagert sich während des Betriebs Schüttgut ab und bildet eine autogene Schutzschicht, welche die Plankenoberfläche schützt vor der hohen thermischen und abrasiven Beanspruchung durch das heiße Klinkermaterial.

Es ist ferner eine Bauart vorgeschlagen worden, bei der die Planken mit glatter Oberfläche versehen sind (zumindest in gewissen Abschnitten). Dort lagert sich kein Schüttgut ab, so dass die Bewegung an sich mit weniger Kraftaufwand und damit effizienter erfolgen kann, aber es kann sich dann auch keine autogene Schutzschicht ausbilden. In der Folge ist die Planke mit glatter Oberfläche thermisch hoch belastet. Eine sichere und ausreichende Kühlung ist daher besonders bedeutend.

Zur Kühlung sind im Unterraum des Rostes mehrere Kammern vorgesehen, durch die das Kühlgas strömt und durch den Kühlrost geleitet wird. Der Kühlluftbedarf ist in verschiedenen Sektionen des Kühlrosts unterschiedlich, in Längsrichtung ist er meist am Anfang wegen des noch sehr heißen Schüttguts hoch und wird weiter hinten zum Ende hin sukzessive geringer wegen der in Förderrichtung allmählich abnehmenden Temperatur des zu kühlenden Schüttguts. Um dies abzubilden, weisen die Kammern im Rostunterraum typischerweise unterschiedliche Druckniveaus auf. Die in Förderrichtung vorne, also am Anfang des Kühlrosts befindlichen Kammern haben ein höheres Druckniveau (gemeint ist der Sollbetriebsdruck) als die in Förderrichtung hinten liegenden, wo das Schüttgut bereits kühler ist. Entsprechend sind die Kammern und ihre Kühlgasversorgungseinheiten ausgelegt und dimensioniert.

Problematisch kann der Defekt einer Kühlgasversorgungseinheit sein, insbesondere von deren Ventilator. Die entsprechende Kammer erhält je nach Defekt zu wenig oder gar kein Kühlgas mehr. Dadurch verschlechtert sich die eigentliche Kühlwirkung in Bezug auf das in diesem Bereich des Kühlrosts aufliegende Schüttgut, aber auch der Kühlrost selbst bzw. die Planken in diesem Bereich sind nicht mehr ausreichend gekühlt. Dies führt in diesem Bereich zu einem Temperaturanstieg des Kühlrosts bzw. seiner Planken, bis hin zu der Temperatur des aufliegenden Schüttguts. Dies ist ausgesprochen kritisch, da dies die Gefahr einer Beschädigung der Planken mit sich bringt. Die Folge sind aufwendige Reparaturen mit ungeplantem Stillsetzen der Anlage, was äußerst nachteilig ist.

Es ist die Aufgabe der Erfindung, eine verbesserte Vorrichtung zum Kühlen bereitzustellen, die diese Nachteile vermeidet und eine höhere Betriebssicherheit aufweist.

Die erfindungsgemäße Lösung liegt in den Merkmalen des unabhängigen Anspruchs. Vorteilhafte Weiterbildungen sind Gegenstand der abhängigen Ansprüche.

Bei einer Vorrichtung zum Kühlen von heißem Schüttgut, insbesondere Zementklinker, mittels eines Kühlgases, wobei die Vorrichtung einen eine Schicht des Schüttguts von einem Aufgabeende in eine Förderrichtung zu einem Abgabeende fördernden Kühlrost aufweist, der von einem in mehrere Kammern unterteilten Rostunterraum durchströmt ist mit Kühlgas, wobei die Kammern in Förderrichtung hintereinander angeordnet sind und die jeweils von einer eigenen zugeordneten Kühlgasversorgungseinheit mit Kühlgas versorgt sind, wobei unmittelbar benachbarte Kammern durch eine Kammertrennwand voneinander getrennt sind, wobei der Kühlrost als Förderrost ausgeführt ist mit mehreren nebeneinander angeordneten, in Förderrichtung langgestreckten und in Förderrichtung wechselnd vor- und zurückbewegten Planken, deren Antrieb so gesteuert ist, dass wenigstens zwei benachbarte Planken im Vorhub gleichzeitig und im Rückhub ungleichzeitig bewegt werden, ist erfindungsgemäß vorgesehen, dass bei einer Gruppe umfassend mindestens zwei Kammern zusätzlich eine Zweitversorgungseinheit für Kühlgas vorgesehen ist, umfassend eine Überbrückungs-Gasführung, die dazu ausgebildet ist, geschlossen zu sein im Normalbetrieb bei laufenden Kühlgasversorgungseinheiten und im Fehlerfall bei Ausfall der Kühlgasversorgungseinheit von einer Kammer der Gruppe automatisch zu öffnen, so dass in diese Kammer Kühlgas der anderen Kammer oder einer der anderen Kammern der Gruppe einströmt.

Die Erfindung stellt damit eine Sicherheitseinrichtung bereit, so dass auch bei Ausfall einer Kühlgasversorgungseinheit die jeweilige, ihr zugeordnete Kammer trotzdem mit Kühlgas versorgt wird, indem über die dann automatisch geöffnete Überbrückungsgasführung Kühlgas der anderen Kammer (oder einer der anderen Kammern bei mehr als zwei Kammern in der Gruppe) einströmt. Unter dem "Kühlgas der anderen Kammer" wird verstanden, dass dieses Gas direkt aus der anderen Kammer kommt oder von deren Kühlgasversorgungseinheit abgezweigt wird, beispielsweise aus einer Zuleitung zwischen Kühlgasversorgungseinheit und Kammer.

Der Kern der Erfindung liegt in dem Gedanken, dass, wenn beispielsweise der Ventilator der Kühlgasversorgungseinheit von einer der Kammern ausfällt, dann automatisch Kühlgas abgezweigt wird von der anderen Kammer bzw. deren Kühlgasversorgungseinheit. Mittels einer solchen erfindungsgemäßen Zweitversorgungseinheit, die im Grunde mittels der Überbrückungs-Gasführung die andere Kammer bzw. deren Kühlgasversorgungseinheit anzapft, kann somit weiterhin eine, wenn auch ggf. verringerte, Kühlung für die Kammer sichergestellt werden, deren Kühlgasversorgungseinheit ausgefallen ist ("betroffene Kammer"). Dabei wird selbstverständlich weiterhin der besagten anderen Kammer, von der bzw. deren Kühlgasversorgungseinheit das Kühlgas abgezweigt wird, weiterhin Kühlgas zugeführt.

Damit schafft die Erfindung mit minimalem Zusatzaufwand mittels der Zweitversorgungseinheit eine Notkühlung. Es kann so selbst bei dem an sich für die Betriebssicherheit kritischen Ausfall der Kühlgasversorgungseinheit, insbesondere deren Ventilator, Schaden von dem Kühlrost und dessen Planken abgewendet werden. Auf diese Weise wird mit geringem Zusatzaufwand eine erhebliche Verringerung des Betriebsrisikos und der Beschädigungsgefahr erreicht. Dies ist es insbesondere von Bedeutung bei einem solchen Kühlrost, der Planken mit glatter Oberfläche zur Auflage von Schüttgut aufweist. Denn hierbei sind die Planken insbesondere am Anfang des Kühlrosts, im Bereich des Aufgabeendes, thermisch sehr hoch belastet. Mit der erfindungsgemäßen Zweitversorgungseinheit und der dadurch bewirkten Notkühlung kann auch in diesem hoch belasteten Bereich bei Ausfall einer der Kühlgasversorgungseinheiten eine Beschädigung der Planke im Bereich der betroffenen Kammer vermieden werden. Dank der erfindungsgemäßen Zweitversorgungseinheit braucht somit die Vorrichtung zum Kühlen auch bei Ausfall einer Kühlgasversorgungseinheit nicht stillgesetzt zu werden.

Die Zweitversorgungseinheit kann unidirektional ausgebildet sein, so dass die ausgefallene Kammer von der anderen versorgt werden kann, aber nicht andersherum, oder sie kann bidirektional ausgebildet sein, so dass die Kammern sich gegenseitig bei Ausfall einer Kühlgasversorgungseinheit versorgen können.

Unter einer Gruppe von Kammern werden zwei oder mehr Kammern verstanden.

Es ist zweckmäßig, wenn die Kammern der Gruppe unmittelbar benachbart sind. Bei mehreren Kammern in der Gruppe kann es genügen, wenn deren Kammern jeweils paarweise unmittelbar benachbart sind.

Von Vorteil ist, wenn die Überbrückungs-Gasführung kammerintern zwischen benachbarten Kammern angeordnet ist, insbesondere in der Kammertrennwand. Durch diese Anordnung in der Kammertrennwand kann eine direkte und raumsparende Ausführung der Überbrückungs-Gasführung erreicht werden. Hierbei wird sich zunutze gemacht, dass erfindungsgemäß die Betätigung der Überbrückungs-Gasführung automatisch erfolgt, sodass deren Zugänglichkeit für Bedienpersonal während des Betriebs nicht erforderlich ist. Eine Integration in die Kammern, insbesondere in die Kammertrennwand zur benachbarten Kammer, ist dank der Erfindung problemlos möglich und stellt so eine direkte und sehr effiziente Art der Realisierung der Überbrückungs-Gasführung dar.

Eine solche kammerinterne Anordnung ist aber nicht zwingend. Es kann auch zweckmäßig sein, die Überbrückungs-Gasführung kammerextern anzuordnen, vorzugsweise jeweils zwischen der Kammer und der zugeordneten Kühlgasversorgungseinheit. Das kann insbesondere jeweils an einer Kühlgas-Zuleitung zwischen der Kühlgasversorgungseinheit und der Kammer vorgesehen sein. Besonders zweckmäßig ist die die Ausführung der Überbrückungs-Gasführung als eine Querleitung, welche die Kühlgas-Zuleitungen von zwei (oder mehr) Kammern und deren jeweiliger zugeordneter Kühlgasversorgungseinheit verbindet. Aufgrund der kammerexternen Anordnung ist die Überbrückungs-Gasführung damit für Wartungsarbeiten leicht zugänglich. Außerdem eignet sich eine solche Ausführung gut für eine Nachrüstung bereits bestehender Vorrichtungen zum Kühlen von heißem Schüttgut, insbesondere Zementklinker.

Es kann vorgesehen sein, dass die Überbrückungs-Gasführung mittels eines Aktuators, insbesondere motorisch, betätigt ist. Auf diese Weise kann eine kontrollierte Betätigung der Überbrückungs-Gasführung erfolgen, beispielsweise von einer Steuereinrichtung.

Besonders zweckmäßig kann es sein, wenn die Überbrückungs-Gasführung passiv betätigt ist, also ohne Aktuator. Beispielweise kann die Überbrückungs-Gasführung so ausgeführt sein, dass sie durch eine Druckdifferenz zwischen den Kammern betätigt ist. Dies hat nicht nur den Vorteil geringeren Aufwands, da ein Aktuator nicht erforderlich ist, sondern bietet weiter den Vorteil einer Unabhängigkeit von Betätigung durch Fremdkraft. Dies erhöht weiter die Zuverlässigkeit und Betriebssicherheit.

Entsprechend ist es weiter vorteilhaft, wenn die Überbrückungs-Gasführung so ausgeführt ist, dass sie nach dem Öffnen selbsttätig schließt, insbesondere durch Feder- und/oder Gewichtskraft. Damit ist ein weiterer Aktuator zum Schließen nicht erforderlich, und es kann - je nach Ausführung - gegebenenfalls sogar der Schließvorgang selbsttätig erfolgen, wenn die ursächliche Störung (bspw. Ausfall des Ventilators der Überbrückungs-Gasführung) behoben ist. Dies vermeidet zusätzlichen Aufwand bei der Reparatur und erhöht außerdem weiter die Betriebssicherheit.

Es kann eine Steuereinrichtung für die Überbrückungs-Gasführung vorgesehen sein, die vorzugsweise Druck und/oder Temperatur in/an der Kammer überwacht oder Leistung der Kühlgasversorgungseinheit überwacht. Überwacht die Steuereinrichtung beispielsweise die Leistung des Ventilators der Kühlgasversorgungseinheit, und wird ein Leistungsabfall mit entsprechender Verringerung des Kühlgasstroms erkannt, so kann die Steuereinrichtung die Überbrückungs-Gasführung betätigen, um so die notwendige Versorgung der von der betroffenen Kühlgasver-sorgungseinheit versorgten Kammer mit Kühlgas zu sichern. Es kann aber auch der Druck in der Kammer überwacht werden, insbesondere ein durch das Kühlgas verursachter Überdruck. Ferner kann auch die Temperatur in oder an der Kammer überwacht werden, beispielsweise an deren Wänden oder an deren Decke, die durch den Kühlrost und dessen Planken gebildet ist. Auf diese Weise kann unmittelbar erfasst werden, wenn die Temperatur an den Planken des Kühlrosts auf kritische Werte ansteigt. Dies ermöglicht eine besonders präzise Steuerung.

Besonders zweckmäßig ist, wenn die Überbrückungs-Gasführung selbstgesteuert ausgeführt ist. Dies vermeidet nicht nur die Notwendigkeit einer gesonderten Steuereinrichtung, sondern bringt darüber hinaus auch den Vorteil mit sich, dass keine Kommunikations- oder andere Leitungen zur Betätigung erforderlich sind. Eine Selbststeuerung spart somit nicht nur Aufwand, sondern erhöht in beträchtlichen Maß die Betriebs- sowie Störsicherheit. Besonders zweckmäßig ist eine Ausführung, bei der ein Differenzdruck zwischen den Kammern (Kammer-Differenzdruck) als Steuergröße herangezogen ist. Überschreitet der Differenzdruck ein bestimmtes Maß (jedenfalls in einer Richtung), so stellt dies gleichzeitig das Signal zum Öffnen der Überbrückungs-Gasführung dar. Besonders zweckmäßig ist eine Kombination mit der passiven Betätigung, wobei dann der Differenzdruck zugleich auch für die Betätigungskraft sorgt. Damit kann eine besonders einfache und störsichere Ausführung der Überbrückungs-Gasführung realisiert werden.

Eine besonders vorteilhafte Ausführungsform der Überbrückungs-Gasführung, die gegebenenfalls unabhängigen Schutz verdient, ist die Ausführung als eine Klappe mit mindestens einem Anschlag. Der Anschlag ist so ausgeführt, dass die Überbrückungs-Gasführung bei Anliegen der Klappe am Anschlag geschlossen ist, also kein Kühlgas durchströmt. Der Anschlag ist typischerweise als fester Anschlag vorgesehen. Vorzugsweise ist auf der anderen Seite der Klappe kein Anschlag vorgesehen, zumindest kein fester. Über den Anschlag hinaus kann die Klappe nicht ausschlagen, aber in der Gegenrichtung weg von dem Anschlag kann die Klappe aufschwenken. Damit ist im Grunde eine Rückschlagklappe gebildet. Die Klappe öffnet dann, wenn auf der Seite mit dem Anschlag ein höherer Druck herrscht als auf der Seite ohne den Anschlag. Fällt in der Kammer, die sich auf der Seite ohne den Anschlag befindet, die Versorgung mit Kühlgas aus, so sinkt dort der Druck und die Klappe öffnet selbsttätig, um Kühlgas von der Kammer, die sich auf der Seite mit dem Anschlag befindet, überströmen zu lassen. Bei Druckgleichstand bzw. bei umgekehrten Druckverhältnissen öffnet die Klappe nicht, da die Klappe am Anschlag anliegt und der Anschlag ein Ausschwenken über ihn hinaus verhindert.

Der Kühlluftbedarf ist in verschiedenen Sektionen des Kühlrosts verschieden, in Längsrichtung ist er meist am Anfang wegen des noch sehr heißen Schüttguts hoch und wird zum Ende hin sukzessiv geringer wegen der in Förderrichtung allmählich abnehmenden Temperatur des zu kühlenden Schüttguts. Um dies abzubilden, weisen die Kammern im Rostunterraum typischerweise unterschiedliche Druckniveaus auf. Die in Förderrichtung vorne, also am Anfang des Kühlrosts befindlichen Kammern haben ein höheres Druckniveau (gemeint ist der Sollbetriebsdruck) als die in Förderrichtung hinten liegenden, wo das Schüttgut bereits kühler ist. Entsprechend sind die Kammern und ihre Kühlgasversorgungseinheiten ausgelegt und dimensioniert.

Die Ausführung mit einer Rückschlagsperre, insbesondere Rückschlagklappe, ist insbesondere für solche gattungsgemäßen Kühlvorrichtungen geeignet, bei denen die Kammern ein unterschiedlich hohes Soll-Druckniveau aufweisen. Häufig ist es so, dass manche Kammern mehr Kühlgas benötigen (meist sind dies die in Förderrichtung vorne, also am Anfang des Kühlrosts befindlichen Kammern) und daher dort ein höheres Druckniveau (gemeint ist der Soll-Betriebsdruck) herrschen soll als in den anderen (typischerweise in Förderrichtung weiter hinten zum Ende des Kühlrosts gelegenen) Kammern, wo das Schüttgut bereits kühler ist. Entsprechend sind die Kammern und ihre Kühlgasversorgungseinheiten ausgelegt und dimensioniert.

Für diesen, in der Praxis bedeutenden Anwendungsfall, bietet die Ausführungsform als Rückschlagklappe erhebliche Vorteile in Bezug auf eine einfache und zugleich sichere Gestaltung der Überbrückungs-Gasführung. Der Anschlag ist hierbei vorzugsweise auf Seiten der Kammer mit dem niedrigeren Soll-Betriebsdruck angeordnet. Fällt im Störfall die Kühlgasversorgungseinheit aus für die Kammer auf der Seite ohne Anschlag, also die Kammer mit dem höheren Soll-Betriebsdruck und somit kritischeren, da mehr Kühlgas benötigend, sinkt dort der Druck und die Klappe kann öffnen, sodass Kühlgas von der anderen Kammer einströmt. Im regulären Normalbetrieb hingegen drückt der höhere Soll-Betriebsdruck die Klappe gegen den Anschlag und schließt somit die Überbrückungs-Gasführung (Rückschlagsicherung). Kurz gesagt ist es besonders vorteilhaft, die Überbrückungs-Gasführung mit einer Rückschlagklappe so anzuordnen, dass ihre Flussrichtung entgegengesetzt orientiert ist zu der Förderrichtung der Kühlvorrichtung.

Besonders zweckmäßig ist es, auf diese Weise mehrere Kammern hintereinander gereiht zu verbinden. Dann ist die jeweils weiter vorne gelegene, kritischere Kammer durch die jeweils hintere Kammer geschützt, bis auf die letzte Kammer. Diese ist jedoch zweckmäßigerweise bereits in einem Bereich mit schon derart abgekühltem Schüttgut angeordnet, dass keine Gefahr mehr für den Kühlrost und dessen Planken besteht.

Der Anschlag ist typischerweise fest. Er kann jedoch optional so ausgeführt sein, dass er vorzugsweise schaltbar ist in eine Entsperrstellung. Das bedeutet, dass der Anschlag so betätigt ist, dass er in seiner Entsperrstellung die Bewegung der Klappe nicht mehr sperrt, sondern ihr ein Ausschwenken über den (nun entsperrten) Anschlag ermöglicht. Auf diese Weise kann eine bidirektionale Wirkung der Klappe erreicht werden, sodass nicht nur wie vorstehend beschrieben die Kammer auf der Seite ohne Anschlag mit Kühlgas versorgt werden kann von der Kammer, die sich auf der Seite mit dem Anschlag befindet, sondern bei Bedarf kann durch den in Entsperrstellung gebrachten Anschlag auch die Kammer, die sich auf der Seite des (nun entsperrten) Anschlags befindet, mit Kühlgas versorgt werden aus der Kammer, die sich auf der Seite ohne Anschlag befindet. Damit ist eine beiderseitige Redundanz gegenüber Ausfall der Kühlgasversorgungseinheit von jeder der beiden Kammern erreicht. Eine vorteilhafte Ausführung des Anschlags ist ein Magnetschalter mit einem Sperrelement, das durch Gewichts- oder Federkraft in die entsperrte Stellung gedrückt ist. Zieht der Magnetschalter an, bewegt er das Sperrelement in die Sperrstellung, sodass die Anschlagfunktion wirksam wird. Ist die Stromzufuhr zum Magnetschalter unterbrochen, nimmt das Sperrelement selbsttätig die entsperrte Stellung ein.

Zweckmäßigerweise kann vorgesehen sein, dass zwei Anschläge vorgesehen sind, einer auf jeder Seite der Klappe, von denen mindestens einer schaltbar ist. Auf diese Weise kann bei Bedarf ein Durchströmen der Überbrückungs-Gasführung blockiert oder freigegeben werden.

Besonders zweckmäßig ist, wenn beide Anschläge schaltbar sind. Damit ist es ermöglicht, die Überbrückungs-Gasführung zu sperren oder deren Betätigungsrichtung vorzugeben durch entsprechendes Entsperren von einem der beiden Anschläge. Diskussionshalber seien die beiden durch die Überbrückungs-Gasführung verbundenen Kammern als vordere Kammer und hintere Kammer bezeichnet. Fällt beispielsweise die Kühlgasversorgungseinheit der vorderen Kammer aus, wird beispielsweise der auf derselben Seite (zur vorderen Kammer) befindliche Anschlag entsperrt. Dies kann beispielsweise geschehen, indem die Kühlgasversorgungseinheit und der Magnetschalter des Anschlags aus derselben Stromquelle gespeist werden. Fällt diese aus oder wird diese unterbrochen, sodass der Ventilator der Kühlgasversorgungseinheit ausfällt, wird als Folge auch der Magnetschalter des Anschlags auf der vorderen Seite stromlos, so dass das Sperrelement durch Feder- oder Gewichtskraft in die entsperrte Stellung gelangt. Damit ist der Anschlag zu dieser Seite entsperrt, sodass bei absinkendem Druck in dieser Kammer die Klappe der Überbrückungs-Gasführung frei ausschwenken kann zu dieser vorderen Kammer hin. Damit kann Kühlgas von der anderen, hinteren Kammer einströmen, um so weiterhin für Kühlung zu sorgen. - Fällt hingegen der Ventilator der Kühlgasversorgungseinheit der hinteren Kammer aus, wird entsprechend der Magnetschalter des Anschlags auf der hinteren Seite stromlos, sodass das Sperrelement entsprechend in die entsperrte Stellung gelangt. Damit ist der Anschlag zu dieser hinteren Seite entsperrt, sodass bei in der Folge absinkendem Druck in der hinteren Kammer die Klappe der Überbrückungs-Gasführung frei ausschwenken kann und somit Kühlgas von der vorderen Kammer einströmen kann. Es ergibt sich so eine universelle Wirkung mit einem hohen Grad an Redundanz, und ferner eine für die praktische Anwendung und Betriebssicherheit bedeutsame "Failsafe"-Wirkung.

Vorstehende Erläuterung bezieht sich auf den Fall, dass die Gruppe mit der Zweitversorgungseinheit umfassend die Überbrückungs-Gasführung zwei Kammern umfasst. Die Gruppe kann aber auch mehr als zwei Kammern umfassen, wobei vorstehende Erläuterung entsprechend anzuwenden ist.

Ferner kann vorgesehen sein, dass bei einer Vielzahl von Kammern auch zwei oder mehr Gruppen vorgesehen sein können. Vorstehende Erläuterungen gelten entsprechend. Hierzu sei angemerkt, dass die Gruppen typischerweise nicht überschneidend sind. Es soll aber nicht ausgeschlossen sein, dass einzelne Kammern (insbesondere an den physischen Rändern der jeweiligen Gruppe) mehr als einer Gruppe angehören.

Die Erfindung wird nachfolgend unter Bezugnahme auf die beigefügte Zeichnung anhand vorteilhafter Ausführungsformen beispielhaft näher erläutert. Es zeigen:
- Fig. 1: einen schematischen Längsschnitt durch eine Vorrichtung zum Kühlen;
- Fig. 2: eine teil-freigeschnittene perspektivische Ansicht einer ersten Ausführungsform der Vorrichtung zum Kühlen;
- Fig. 3: einen Längsschnitt der ersten Ausführungsform;
- Fig. 4: einen Horizontalschnitt der ersten Ausführungsform entlang der Linie IV-IV gemäß Fig. 3;
- Fig. 5A-D: schematische Teil-Draufsichten auf einen Kühlrost der Vorrichtung in verschiedenen Stadien einer Förderbewegung;
- Fig. 6: einen Teil-Horizontalschnitt eines Anfangsabschnitts einer zweiten Ausführungsform;
- Fig. 7: einen Horizontalschnitt einer dritten Ausführungsform;
- Fig. 8: eine Schnittdarstellung eines Beispiels für eine Überbrückungs-Gasführung mit einer Klappe und einem Rahmen;
- Fig. 9: einen Detail-Querschnitt zu einer alternativen Lagerung der Klappe gemäß Fig. 8;
- Fig. 10A, B: eine schematische Ansicht für die ÜberbrückungsGasführung mit einer Klappe mit einem festen und einem schaltbaren Anschlag;
- Fig. 11A, B: eine schematische Ansicht für eine Variante der Überbrückungs-Gasführung mit zwei Anschlägen;
- Fig. 12A,: B eine Detaildarstellung zu den Anschlägen gemäß Fig. 11; und
- Fig. 13A-C: schematische Ansichten für eine weitere Variante der Überbrückungs-Gasführung mit einer Klappe mit zwei schaltbaren Anschlägen.

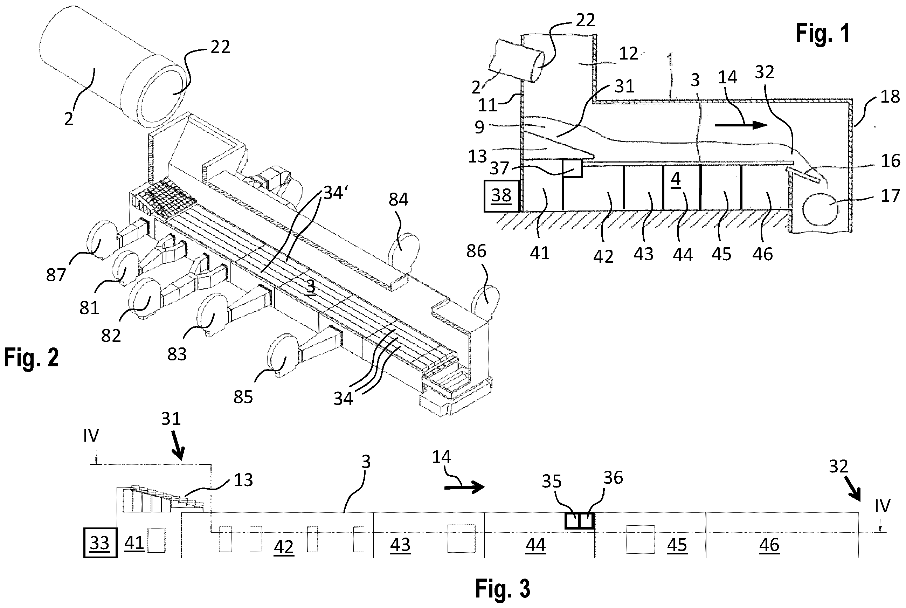

Ein schematisches Ausführungsbeispiel für eine erfindungsgemäße Vorrichtung zum Kühlen ist in Fig. 1 dargestellt. Ein Gehäuse 1 weist im Bereich seiner Vorderwand 11 an einem Ende einen Aufgabeschacht 12 auf, an dem eine Abwurfmündung 22 eines vorgeschalteten Drehrohrofens 2 mündet. Von dem Drehrohrofen 2 abgeworfenes zu kühlendes Schüttgut, welches nachfolgend auch kurz als Kühlgut bezeichnet wird, fällt im Aufgabeschacht 12 auf eine Aufgaberampe 13 und gelangt von dort auf einen erfindungsgemäß ausgeführten Kühlrost 3. Die Aufgaberampe 13 erstreckt sich nahezu über die gesamte Breite des Kühlrosts 3, um so initial bereits für eine möglichst breit verteilte Aufgabe des Schüttguts 9 auf den Kühlrost 3 zu sorgen.

Der Kühlrost 3 ist im Wesentlichen eben (horizontal oder geneigt eingebaut) ausgebildet und bildet eine Auflagefläche für das Kühlgut 9. Zur Kühlung des auf dem Kühlrost 3 transportierten zu kühlenden Schüttguts 9 wird Kühlgas in einen Rostunterraum 4 eingeblasen und von dort durch den Kühlrost 3 in das aufliegende Schüttgut 9 geleitet. Ferner wird das auf dem Kühlrost 3 aufliegende Schüttgut 9 von einem Aufgabeende 31 im Bereich der Aufgaberampe 13 in einer Förderrichtung 14 zu einem Abgabeende 32 transportiert. Über ein optional vorgesehenes Abwurfschild 16 wird das nunmehr weitgehend abgekühlte Schüttgut 9 gezielt zu einer nachgeordneten Bearbeitungsstufe geführt, beispielsweise einem Brecher 17. In diesem Bereich ist das Gehäuse 1 durch eine Rückwand 18 begrenzt. Entlang der Längsseiten des Kühlrosts 3 sind Seitenwände 15 vorgesehen, sodass der Kühlrost 3 komplett von dem Gehäuse 1 umgeben ist.

Der sich so ergebende Rostunterraum 4 ist in mehrere Kammern 41, 42, 43, 44, 45, 46 geteilt. Wie insbesondere in Fig. 2 gut erkennbar dargestellt ist, sind den einzelnen Kammern jeweils Kühlgasversorgungseinheiten 81, 82, 83, 84, 85, 86 zugeordnet, welche die jeweilige Kammer 41, 42, 43, 44, 45, 46 mit der gleichen Endziffer mit Kühlgas versorgt. Für den Bereich der Aufgaberampe 13 es ebenfalls eine Kühlgasversorgungseinheit 87 vorgesehen. Diese Kühlgasversorgungseinheiten umfassen jeweils einen Ventilator, und das vom Ventilator bereitgestellte Kühlgas wird jeweils über eine Zuleitung 80 in die jeweilige Kammer 41 bis 46 bzw. der Aufgaberampe 13 zugeführt.

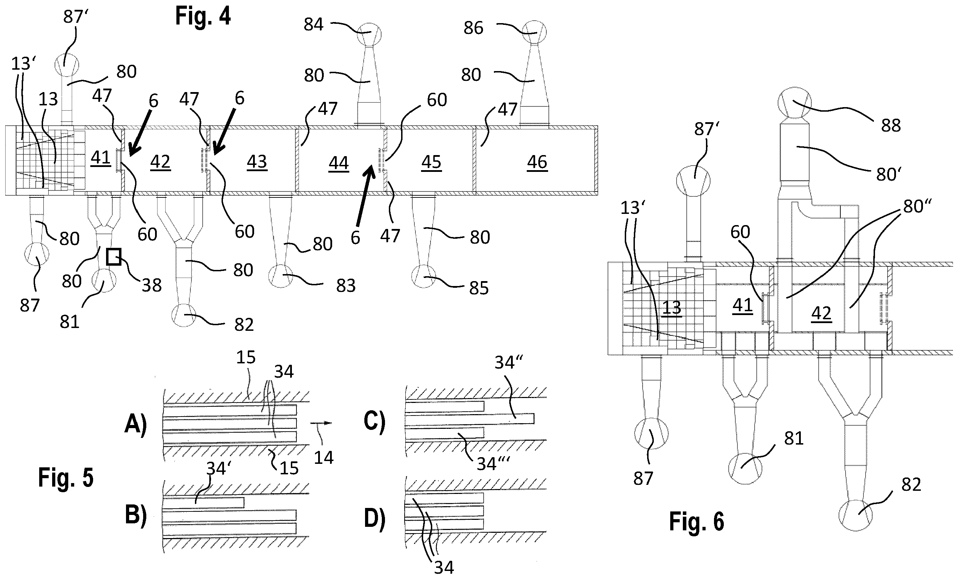

Die jeweiligen Kühlgasversorgungseinheiten 81 bis 87 sind mit ihren Ventilatoren so ausgelegt, dass die von ihnen bereitgestellte Menge an Kühlgas abgestimmt ist auf den Kühlbedarf. Dort wo das kühlende Schüttgut 9, der Zementklinker, die höchste Temperatur hat, ist mehr Kühlgas einzublasen als in anderen Kammern, wo das Schüttgut bereits abgekühlt ist. Auf diese Weise soll über die Länge des Kühlrosts 3 hinweg mit möglichst geringem Einsatz von Kühlgas die größtmögliche Kühlwirkung erzielt werden, wie es für einen effizienten Betrieb der Vorrichtung zum Kühlen erforderlich ist. Sind die Kammern 41 bis 46, wie insbesondere in der Längsdarstellung in Fig. 3 gut zu erkennen ist, in Förderrichtung 14 hintereinander angeordnet, so ergibt sich in Förderrichtung durch die Wirkung des Kühlgases und damit bewirkten Kühlung eine stets abnehmende Temperatur des aufliegenden Schüttguts 9. Bei solch stets abnehmender Temperatur in Förderrichtung 14 lässt sich allgemein sagen, dass bei hintereinander angeordneten Kammern 41 bis 46 generell die Menge an Kühlgas bzw. der in der jeweiligen Kammer 41 herrschende Druck am Aufgabeende 31 des Kühlrosts 3 höher sind und jeweils sukzessive abnehmen in den Kammern 42 bis 46, die in Förderrichtung 14 weiter hinten liegen. Hierbei kühlt das von der jeweiligen Kühlgasversorgungseinheit 81 bis 86 zugeführte Kühlgas sowohl die Kammer 41 bis 46 wie auch, nachdem es durch den Kühlrost 3 geströmt ist, das aufliegende Schüttgutbett des Schüttguts 9. Für die Kühlgasversorgungseinheit 87 gilt dies entsprechend in Bezug auf die Aufgaberampe 13. Wie insbesondere in der Aufsicht in Fig. 4 gut zu erkennen ist, ist im Bereich der Aufgaberampe 13 zusätzlich noch eine weitere Kühlgasversorgungseinheit 87` angeordnet. Diese versorgt Seitenabschnitte 13' der Aufgaberampe 13, die einen von der breiten Mitte der Aufgaberampe 13 verschiedenen Bedarf an Kühlgas haben.

Der Kühlrost 3 ist in der Weise ausgeführt, dass er eine Mehrzahl von parallel in Förderrichtung 14 angeordneten langgestreckten Planken 34 aufweist. Sie sind gelagert auf einem Stahlunterbau mit Lagerrollen (nicht dargestellt) und sind einzeln vor und zurück beweglich. Sie sind angetrieben von einem Antrieb 37 mit einer Steuereinrichtung 33 in der Weise, dass die Planken 34 (in Förderrichtung 14 gesehen) gemeinsam vorgeschoben (Vorhub) und nacheinander zurückbewegt (Rückhub) sind.

Zur Erläuterung der Funktionsweise der Förderfunktion des Kühlrosts 3 sei Bezug genommen auf Fig. 5A-D. Der Kühlrost 3 besteht, wie bereits ausgeführt, aus mehreren nebeneinander angeordneten langgestreckten Planken 34, von denen in Fig. 5A-D beispielhaft drei Planken 34', 34", 34‴ dargestellt sind, die für jeweils eine oder eine Gruppe von nebeneinanderliegenden Planken 34 stehen können. Das Funktionsprinzip, welches von der Steuereinrichtung 33 für den Antrieb 37 ausgeführt wird, ist mit seinen wesentlichen Phasen in den einzelnen Abbildungen der Fig. 5A-D dargestellt. Das Grundprinzip ist eine zyklische Bewegungsfolge, bei der sich die Planken 34`, 34", 34‴ in Förderrichtung 14 bewegen. In Fig. 5A ist eine Phase des Zyklus abgebildet, worin die Planken 34 im Wesentlichen gleichzeitig in Förderrichtung 14 um eine Hublänge vorgeschoben werden bis in ihre vordere Endstellung. Die nächste Phase ist in Fig. 5B dargestellt. Dabei wird eine der Planken 34, nämlich die Planke 34', zurückgezogen um eine Hublänge, bis sie ihre hintere Endstellung erreicht. Für die in Fig. 5C dargestellte Phase bewegt sich die Planke 34‴ zurück, bis sie ihre hintere Endstellung erreicht. Schließlich bewegt sich auch die Planke 34" in ihre hintere Endstellung, sodass die in Fig. 5D dargestellte Stellung erreicht wird. Der Zyklus beginnt dann von neuem. Auf diese Weise entsteht ein Bewegungsmuster, bei dem alle Planken gemeinsam nach vorne bewegt werden, während sie einzeln nacheinander zurückgezogen werden. Bei dem gemeinsamen Vorschub nehmen die Planken 34 das auf ihnen liegende Gutbett des Schüttguts 9 mit. Wenn danach die Planken 34 einzeln nacheinander zurückgefahren werden, kann das auf der jeweiligen zurückbewegten Planke liegende Schüttgut 9 größtenteils nicht folgen, weil es durch Reibungskräfte festgehalten wird, die von dem auf den benachbarten Planken liegendem Schüttgut 9 bzw. von den Seitenwänden 15 darauf ausgeübt werden. Man kann daher verkürzt sagen, dass das Schüttgut 9 am gemeinsamen Vorhub der Planken 34 teilnimmt, an dem Rückhub der einzelnen Planken aber nicht. Auf diese Weise entsteht die Förderwirkung. Selbst wenn ein Teil des Schüttguts im Rückhub mitbewegt wird, schadet dies nicht, da es nur einen kleinen Teil betrifft und eine erhebliche Netto-Förderwirkung verbleibt.

Die Planken 34 üben eine Doppelfunktion aus, zum einen sorgen sie für die Förderwirkung auf das zu transportierenden Schüttguts 9 in Förderrichtung 14 und ferner bewirken sie durch das die Planken 34 von unten aus dem Rostunterraum 4 nach oben durchströmende Kühlgas eine Kühlung des aufliegenden Schüttguts 9. Hier sind die Planken 34 insbesondere im Bereich des Aufgabeendes 31 thermisch hoch belastet, weil dort das aufliegende Schüttgut 9, welches erst unmittelbar vorher aus dem Drehrohrofen 2 abgeworfen wurde, seine höchste Temperatur aufweist, die ganz am Anfang noch bis zu 1200 °C betragen kann. Bei Ausfall der Zuführung von Kühlgas wird die Temperatur der Planke 34 in diesem Bereich ansteigen, bis sie nahezu die Temperatur des Schüttguts in diesem Bereich angenommen haben. Für Planken 34, die eine glatte Oberfläche aufweisen, auf der das zu kühlende Schüttgut 9 unmittelbar aufliegt (die also nicht eine autogene Schutzschicht aufweisen), kann dies kritisch sein.

Die Steuereinrichtung 33 steuert nicht nur den Antrieb 37 der Planken 34 des Kühlrosts 3, sondern ist ferner angeschlossen an Sensoren 34, 36 für Druck und Temperatur in den jeweiligen Kammern 41 bis 46 (in Fig. 3 exemplarisch für Kammer 44 dargestellt). Damit können Temperatur und Druck überwacht werden. Ferner ist an den Kühlgasversorgungseinheiten jeweils ein Aktivitätssensor 38 angeordnet (in Fig. 4 exemplarisch für die Kühlgasversorgungseinheit 81 dargestellt). Er ist dazu ausgebildet, bei Betriebsstörung der jeweiligen Kühlgasversorgungseinheit ein Fehlersignal an die Steuereinrichtung 33 zu übermitteln.

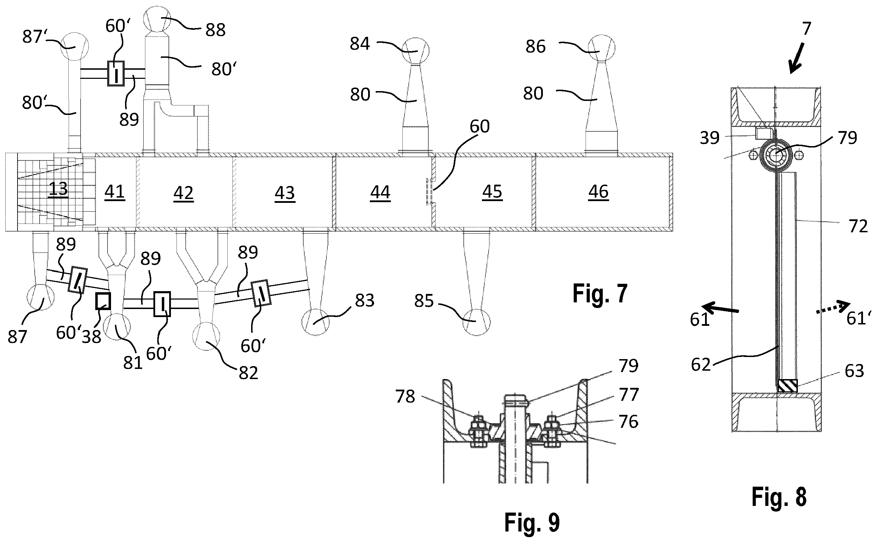

In der Aufsicht in Fig. 4 ist ferner zu erkennen, dass zwischen den Kammern 41 und 42 in der dortigen Kammertrennwand 47 eine Überbrückungs-Gasführung 60 vorgesehen ist. Es wird nun Bezug genommen auf Fig. 8. Diese Überbrückungs-Gasführung 60 ist ausgeführt als eine gewichtsbelastete Klappe 62, die beweglich gelagert aufgehängt ist an einer Horizontalachse 79. Die Klappe 62 ist in einem Rahmen 7 angeordnet, der in der Kammertrennwand 47 eingesetzt ist. Der Rahmen 7 umfasst einen festen Anschlag 63 unterhalb der Horizontalachse 79, gegen den die Klappe 62 in ihrer (vertikalen) Ruheposition anliegt. Au-ßer dem Anschlag 63 weist der Rahmen 7 eine umlaufende Dichtung 72 auf, sodass die Klappe 62 in ihrer Ruheposition abgedichtet ist. Der Anschlag 63 ist auf einer Sperrseite 61` der Klappe 62 angeordnet. In die Gegenrichtung, mithin also einer Öffnungsseite 61, kann die Klappe 62 frei aufschwingen. Es handelt sich hierbei um eine selbstbetätigte Überbrückungs-Gasführung, genauer gesagt ist sie betätigt durch eine Druckdifferenz zwischen den beiden benachbarten Kammern. Bedingt durch die Gewichtskraft der ausgeschwenkten Klappe 62 schließt diese Klappe 62 selbsttätig, sobald keine Druckdifferenz mehr besteht. Zusätzlich oder alternativ kann das Schließen durch eine Feder (in Fig. 8 nicht dargestellt) unterstützt sein.

Die in der Kammertrennwand 47 zwischen den Kammern 41, 42 angeordnete Überbrückungs-Gasführung 60 ist Teil einer Zweitversorgungseinheit 6 für die Kammer 41. Im Normalbetrieb werden die Kammern 41, 42 durch die ihnen jeweils zugeordnete Kühlgasversorgungseinheiten 81, 82 mit Kühlgas versorgt. Im Normalbetrieb herrscht in den Kammern 41, 42 jeweils der Soll-Betriebsdruck. Das bedeutet, dass wie bereits erläutert, der Druck in der in Förderrichtung 14 vorne gelegenen, dem Aufgabeende 31 näheren Kammer 41 höher ist als der Druck in der in Förderrichtung 14 hinten gelegenen, dem Abgabeende 32 näheren Kammer 42. Es besteht also eine positive Druckdifferenz in Förderrichtung, wodurch die Klappe 62 gegen den auf Seiten der Kammer 42 angeordneten Anschlag 63 gedrückt ist. Die Klappe 62 liegt somit dicht an, und die durch die Überbrückungs-Gasführung 60 gebildete Zweitversorgungseinheit 6 ist nicht aktiv. - Im Fehlerfall gilt hingegen folgendes: Fällt die Kühlgasversorgungseinheit 81 für die Kammer 41 aus, so dass dort kein Kühlgas mehr einströmt, führt dies in der Folge zu einem sinkenden Druck in der Kammer 41. Die positive Druckdifferenz besteht dann nicht mehr, sondern kehrt sich um zu einer negativen Druckdifferenz, sodass der Druck in der Kammer 42 größer ist. Dies bedeutet, dass unter der Wirkung dieser Druckdifferenz die Klappe 62 in Öffnungsrichtung 61 gedrückt wird, sie öffnet und somit Kühlgas aus der Kammer 42 in die Kammer 41 einströmt und für eine Kühlung der Kammer 41 sorgt. Ein kritischer Temperaturanstieg der Kammer 41 und dem darüber angeordneten Bereich der Planke 34, wie er an sich bei Ausfall der Kühlung auftreten würde, kann durch die somit bewirkte Notkühlung verhindert werden. Dies geschieht automatisch, nämlich durch Selbststeuerung der Überbrückungs-Gasführung 60 mittels der durch Druckdifferenz betätigten Klappe 62. Damit fungiert die Zweitversorgungseinheit 6 als Sicherheitseinrichtung zur wirksamen Steigerung der Betriebssicherheit.

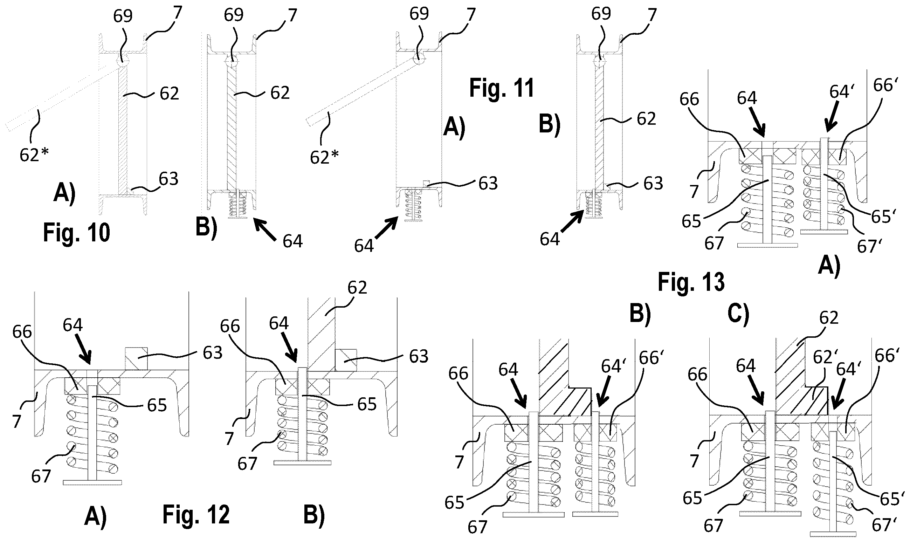

Die Arbeitsweise der Klappe 62 der Überbrückungs-Gasführung 60 ist in Fig. 10 schematisch dargestellt. Im Normalfall hängt die Klappe vertikal nach unten und liegt gegen den Anschlag 63 an. Die positive Druckdifferenz presst hierbei die Klappe 62 gegen den Anschlag 63, sodass eine Abdichtung besteht. Im Fehlerfall hingegen kehrt sich die Druckdifferenz, wie bereits beschrieben, um und die Klappe 62 kann nun in Öffnungsrichtung 62 ungehindert ausschwenken (symbolisiert durch die Klappenstellung 62*), sodass Kühlgas durch die nun geöffnete Klappe 62 einströmen kann.

Bei dieser Art der Ausführung der Überbrückungs-Gasführung 60 sind die Drücke in den Kammern 41, 42 nicht vollständig entkoppelt. Steigt, was im Betrieb aufgrund übermäßig aufliegenden Schüttguts 9 im Bereich der Kammer 42 auftreten kann, der Strömungswiderstand des Schüttguts an, so steigt entsprechend auch der Druck des Kühlgases in der Kammer 42. Bei ungünstigen Verhältnissen kann es hier zu einer unerwünschten Öffnung der Klappe 62 kommen, wenn nämlich der Druck in der Kammer 42 größer wird als der Druck in der Kammer 41. Dann fließt Kühlgas aus der Kammer 42 ab, was in dieser Situation unerwünscht sein kann.

Die Überbrückungs-Gasführung 60 wirkt hier unidirektional, da bei Ausfall der Kühlgasversorgungseinheit 82 für die Kammer 42 keine entsprechende Notkühlung erfolgt. Um in dieser Situation ein unerwünschtes Öffnen der Klappe 62 vermeiden zu können, kann ein weiterer Anschlag in Gestalt eines schaltbaren Anschlags 64 vorgesehen sein. Dies ist in Fig. 11A, B dargestellt. Im Normalbetrieb ist der schaltbare Anschlag 64 entsperrt, in dem mittels eines Elektromagneten 66 ein Sperrelement 65 zurückgezogen ist, sodass es nicht mit der Klappe 62 interferiert. Dann ist eine selbsttätige automatische Funktion der Überbrückungs-Gasführung 60 gegeben, wie in den vorstehenden Absätzen erläutert. Um ein unerwünschtes Öffnen der Klappe 62 zu vermeiden, kann der Elektromagnet 66 bestromt werden und damit das Sperrelement 65 in den Schwenkbereich der Klappe 62 bewegen, sodass wie in Fig. 11B dargestellt ein zweiter Anschlag gebildet ist. Damit kann die Klappe 62 nicht öffnen, sodass die beschriebene Situation eines unerwünschten Abflie-ßens von Kühlgas bei widerstandsbedingtem Druckanstieg in der Kammer 42 sicher vermieden werden kann. Auf diese Weise ist eine Kontrolle der Steuereinrichtung 33 über den Betrieb der Überbrückungs-Gasführung 60 zwischen den Kammern gewährleistet.

Der Aufbau des schaltbaren Anschlags 64 ist näher in Fig. 12 A, B dargestellt. Mit dem Elektromagneten 66 wirkt eine Öffnungsfeder 67 zusammen. Sie ist dazu ausgebildet, das Sperrelement 65 bei stromlosen Elektromagneten 66 in die geöffnete Stellung zu bringen, um so die Notöffnungsfunktion der Klappe 62 zu gewährleisten (Fail-Safe Funktion). Ist der Elektromagnet 66 hingegen aktiv bestromt unter Kontrolle der Steuereinrichtung 33, so ragt das Sperrelement 65 in den Schwenkweg der Klappe 62 und blockiert diese in ihrer Ruheposition.

Eine gleichartige Zweitversorgungseinheit 6 mit Überbrückungs-Gasführung 60 ist bei der in Fig. 4 dargestellten Ausführungsform auch in der Kammertrennwand 47 zwischen der Kammer 42 und der Kammer 43 angeordnet. Somit wird die Kammer 42 bei Ausfall von deren Kühlgasversorgungseinheit 82 von der Kammer 43 bzw. deren Kühlgasversorgungseinheit 83 mit Kühlgas versorgt. Bei Ausfall der Kühlgasversorgungseinheit 81 für die Kammer 41 wird diese, wie vorstehend beschrieben, von der Kammer 42 (oder sogar der Kammer 43) mitversorgt. Die Kammern 41, 42, 43 bilden hierbei eine Gruppe. Eine weitere solche Zweitversorgungseinheit 6 mit Überbrückungs-Gasführung 60 ist gebildet zwischen den Kammern 44 und 45. Diese bilden eine eigene Gruppe. Damit ist diese Gruppe in Bezug auf ihre Zweitversorgung unabhängig von der ersten Gruppe. Im Übrigen ist Aufbau und Funktion wie vorstehend beschrieben.

Der Anfangsabschnitt einer zweiten beispielhaften Ausführungsform der Vorrichtung zum Kühlen ist in Fig. 6 dargestellt. Sie unterscheidet sich von der ersten Ausführungsform im Wesentlichen dadurch, dass zusätzlich eine gesonderte Kühlgasversorgungseinheit 88 für randständige Planken (Planken 34 an den Längsseitenrändern des Kühlrosts 3) vorgesehen ist. Diese längs der Seitenwände 15 des Gehäuses 1 verlaufenden randständigen Planken 34 bedürfen häufig einer besonderen Kühlung, zumindest im Anfangsbereich des Kühlrosts 3. Dazu ist die zusätzliche Kühlgasversorgungseinheit 88 vorgesehen, welche über besondere Zuleitungen 80' außerhalb sowie 80" innerhalb der Kammer (in Fig. 6 beispielhaft anhand der Kammer 42 dargestellt) die randständigen Planken 34 an beiden Längsseiten des Kühlrosts 3 versorgt. Damit ist eine kontrollierte Lüftung bzw. Kühlung der Seitenbereiche des Kühlrosts 3 sowie ggf. auch der Aufgaberampe 13 ermöglicht. Es sei angemerkt, dass eine solche gesonderte Kühlgaszuführung nicht immer auf beiden Seiten erforderlich ist, mitunter genügt es auch, sie lediglich einseitig vorzusehen (zumeist ist es die Seite, auf der sich der feinere Anteil des Schüttguts 9 ablagert, da dieser einen größeren Strömungswiderstand darstellt und somit mehr Kühlgas benötigt wird). Durch die gesonderte Ausführung kann somit der Druck für die Zuführung von Kühlgas an die randständigen Planken 34 höher eingestellt sein, also mit einem höheren Soll-Betriebsdruck. Entsprechendes kann vorgesehen sein für den randständigen Bereich 13' der Aufgaberampe 13, der ebenfalls von einer zusätzlichen Kühlgasversorgungseinheit 87' versorgt ist. Es ist nicht erforderlich, stets beide zusätzlichen Kühlgasversorgungseinheiten 87` sowie 88 gemeinsam vorzusehen, so kann es beispielsweise auch genügen, lediglich eine davon vorzusehen, wie beispielsweise bei der ersten Ausführungsform in Fig. 4 dargestellt. Wegen der anderen Druckverhältnisse, das bedeutet in der Regel höheren Soll-Betriebsdruck, ist es typischerweise nicht zweckmäßig, dass die zusätzlichen Kühlgasversorgungseinheiten 87` bzw. 88 zu der gleichen Gruppe wie die Kühlgas-Versorgung der entsprechenden Kammer gehören. Eher ist es zweckmäßig, die gesonderten Kühlgasversorgungseinheiten 87` und 88 in einer eigenen Gruppe zusammenzufassen.

Es wird nun Bezug genommen auf Fig. 7. Dargestellt ist dort eine dritte Ausführungsform, die sich von der ersten und zweiten Ausführungsform im Wesentlichen dadurch unterscheidet, dass die Überbrückungs-Gasführung 60' nicht kammerintern (insbesondere an der jeweiligen Kammertrennwand 47) angeordnet ist, sondern kammerextern an den jeweiligen Zuleitungen 80, 80`. In Fig. 7 ist die Ausführung der externen Überbrückungs-Gasführung 60' als eine Querleitung 89 dargestellt, die zwei Zuleitungen 80 von der jeweiligen Kühlgasversorgungseinheit zu der von ihr versorgten Kammer miteinander verbindet. Eine solche Ausführung bietet insbesondere den Vorteil eines erleichterten Zugangs, insbesondere zur Wartung oder Reparatur, und zwar auch außerhalb von Zeiten der Stillsetzung der Kühlvorrichtungen. Weiter hat diese Anordnung den Vorteil, dass sie sich gut zur Nachrüstung von bestehenden Kühlvorrichtungen eignet. Der Aufbau der Überbrückungs-Gasführung 60' kann insbesondere demjenigen der Überbrückungs-Gasführung 60 in einer Kammertrennwand 47 entsprechen. Es kann ebenfalls eine Klappe 62 in einem Rahmen 7 vorgesehen sein, wie vorstehend beschrieben.

Da außerhalb der Kammer mitunter mehr Bauraum zur Verfügung steht, können auch größere Konstruktionen vorgesehen sein, beispielsweise mehrere Klappen 62 mit entsprechenden Rahmen 7, wie in Fig. 8 dargestellt, neben- und/oder übereinander angeordnet sein. Es versteht sich, dass bei entsprechend groß dimensionierter Kammer bzw. Kammertrennwand 47 derartige Anordnungen auch kammerintern möglich sind.

Insbesondere bei einer externen Anordnung (aber nicht zwingend ausschließlich) kann ferner vorgesehen sein, dass die Klappe 62 mittels eines Aktuators 39 betätigt ist. Dies bietet den Vorteil einer positiven Kontrolle über die Stellung der Klappe 62 durch die Steuereinrichtung 33. Der damit einhergehende Nachteil, dass eine Signal- sowie eine Betriebsspannungsverbindung (nicht dargestellt) zu dem Aktuator 39 erforderlich sind, wiegt bei einer externen Anordnung nicht schwer. (Es sei angemerkt, dass gewünschtenfalls solche Verbindungen auch bei einer kammerinternen Anordnung vorgesehen sein können.)

In Fig. 8 ist das Scharnierrohr 79 zur Lagerung der Klappe 62 horizontal oben in dem Rahmen 7 angeordnet. Dadurch hängt die Klappe 62 von dem Scharnierrohr 79 herab, sodass es durch Gewichtskraft selbständig die abgebildete Ruheposition einnimmt. Das Scharnierrohr 79 kann aber auch in anderer Höhe, beispielsweise etwa auf halber Höhe der Klappe 62 angeordnet sein. Die durch Gewicht hervorgerufene Rückstellkraft verringert sich dadurch, was bei der Betätigung durch den Aktuators 39 von Vorteil sein kann. Bei einer etwa mittigen Anordnung im Bereich des Schwerpunkts der Klappe 62 ist die gewichtsbedingte Rückstellkraft typischerweise nicht oder kaum mehr vorhanden. Entsprechendes gilt für die selbsttätige Steuerung der Klappe 62 durch Druckdifferenz. Bei Lagerung des Scharnierrohrs 79 etwa in der Mitte gleichen sich die Drucckräfte in Bezug auf die untere und obere Hälfte der Klappe 62 etwa aus, sodass keine selbsttätige Betätigung erfolgt. Die selbsttätige Steuerung und Betätigung wird umso ausgeprägter, je weiter das Scharnierrohr 79 außerhalb der Mitte angeordnet ist.

Eine horizontale Anordnung des Scharnierrohrs 79 und damit der Lagerachse für die Klappe 62 ist nicht zwingend. Es kann ebenfalls eine vertikale Anordnung des Scharnierrohrs 79 vorgesehen sein, wie sie in Fig. 9 ausschnittsweise dargestellt ist. Hierzu ist das Scharnierrohr 79 hängend befestigt an einer Oberseite des Rahmens 7 mittels eines Lagerbocks 78, der über Befestigungsschrauben 76 mit Muttern 77 fest mit der Oberseite des Rahmens 7 verbunden ist und das Scharnierrohr 79 in seiner Position sichert. Auf der gegenüberliegenden, unteren Seite des Rahmens 7 kann als Gegenstück ein weiterer Lagerbock (nicht dargestellt) vorgesehen sein. Auch bei solcher vertikalen Lagerung gilt, dass bei außermittiger Anordnung des Scharnierrohrs 79 eine selbsttätige Steuerung der Klappe 62 durch die Druckdifferenz erfolgen kann. Die vertikale Anordnung bietet insbesondere einen Vorteil, wenn eine kontrollierte Verstellung durch den Aktuator 39 gewünscht und die selbsttätige Rückstellung, insbesondere durch Gewichtskraft wie bei einer Anordnung gemäß Fig. 8, nicht gewünscht ist.

Eine weitere Variante der Überbrückungs-Gasführung 60 ist in Fig. 13A-C dargestellt. Hier ist anders als bei den bisher beschriebenen Varianten kein fester Anschlag vorgesehen, sondern es sind auf beiden Seiten der Klappe 62 schaltbare Anschläge 64 vorgesehen. Diese sind jeweils so aufgebaut, wie der vorstehend in Bezug auf die Ausführung gemäß Fig. 12A, B beschriebene Anschlag 64 umfassend ein Sperrelement 65, das von einem gegen eine Öffnungsfeder 67 arbeitenden Elektromagneten 66 betätigt ist. Bei der Variante gemäß Fig. 13A-C sind beide Anschläge 64, 64' schaltbar. Sie sind auf gegenüberliegenden Seiten der Klappe 62 angeordnet. Es sei angemerkt, dass die Klappe 62 mit einem Verstärkungselement 62' versehen ist. Damit kann die Zusatzbelastung getragen werden, die durch einen eher punktuell wirkenden verstellbaren Anschlag 64, 64' wirkt, verglichen mit einem ausgedehnt anliegenden festen Anschlag 63. Der zweite schaltbare Anschlag 64' ist im Grunde identisch aufgebaut zu dem bereits beschriebenen schaltbaren Anschlag 64 (in Fig. 13A-C lediglich aus darstellerischen Gründen etwas kleiner gezeichnet). Indem beide Anschläge 64, 64' schaltbar sind, kann die Steuereinrichtung 33 durch entsprechendes Bestromen des Elektromagneten 66 oder des Elektromagneten 66` bestimmen, welcher Anschlag wirkt und welcher entsperrt ist. Damit kann die Klappe 62 den Freiheitsgrad erhalten, in beide Richtungen ausschwenken zu können, oder sie kann uni- bzw. bidirektional gesperrt sein. Damit wird eine Bidirektionalität der Überbrückungs-Gasführung 60 erreicht.

Anknüpfend an das vorstehend unter Bezug auf die Fig. 12A, B erläuterte Beispiel sei bei der in Fig. 13A-C dargestellten Variante wieder angenommen, dass die Überbrückungs-Gasführung zwischen den Kammern 41 und 42 in der dortigen Kammertrennwand 47 angeordnet ist. Fällt die Kühlgasversorgungseinheit 81 aus, so sinkt der Druck in der Kammer 41 und die Klappe 62 kann in Richtung zu dieser Kammer 41 ausschwenken, wenn der verstellbare Anschlag 64 entsperrt ist (s. Fig. 13A, die Klappe 62 ist nach links aus dem Zeichnungsbereich ausgeschwenkt). Damit wird eine Notversorgung zugunsten der Kammer 41 erreicht, insoweit wie bereits in Bezug auf Fig. 12A erläutert. Die Besonderheit der Ausführungsform gemäß Fig. 13A-C liegt darin, dass die Klappe 62 wahlweise auch in die entgegengesetzte Richtung, also bei der beispielhaften Anordnung in der Trennwand zwischen den Kammern 41 und 42 weg von der Kammer 41 zur Kammer 42 hin schwenken kann. Dazu ist der feste Anschlag bei der Ausführungsform gemäß Fig. 12A, B ersetzt durch den schaltbaren Anschlag 64`. Bei Entsperrung des schaltbaren Anschlags 64' ist die Klappe 62 frei, in die andere Richtung auszuschwenken. Dazu ist der Stromfluss zu dem Elektromagnet 66` des schaltbaren Anschlag 64` unterbrochen, sodass das Sperrelement 65` mit der Kraft der Öffnungsfeder 67` zurückgedrückt und somit entsperrt ist. Damit kann bei Ausfall der Kühlgasversorgungseinheit 82 für die Kammer 42 und nachfolgendem Druckabfall in dieser Kammer 42 eine Druckdifferenz zu der Kammer 41 entstehen, sodass infolge des höheren Drucks in der Kammer 41 die Klappe 62 ausschwenkt in Richtung der Kammer 42 und damit Kühlgas aus der Kammer 41 in die Kammer 42 einströmt. Das Kühlgas strömt somit nun in Gegenrichtung zu dem vorher betrachteten Fall. Somit ist eine Bidirektionalität gegeben, bei der die Überbrückungs-Gasführung sowohl bei Ausfall der Kammer 41 oder bei Ausfall der Kammer 42 wirksam als Zweitversorgungseinheit 6 für die betroffene Kammer fungieren kann. Der Anwendungsbereich der Zweitversorgungseinheit 6 wird damit universeller, und die Betriebssicherheit der Kühlung wird weiter erhöht.

Die Elektromagneten 66, 66' sind zweckmäßigerweise von der Steuereinrichtung 33 kontrolliert und bestromt. Dies sichert ein Maximum an Steuerbarkeit. Es kann aber auch eine vereinfachte Steuerung vorgesehen sein in der Weise, dass der Ventilator der jeweiligen Kühlgasversorgungseinheit für die Kammer auf der einen Seite der Klappe 62 an denselben Stromkreis angeschlossen ist wie der Elektromagnet 66 auf dieser Seite, und entsprechend der Ventilator der Kühlgasversorgungseinheit für die Kammer auf der anderen Seite an denselben Stromkreis angeschlossen ist wie der Elektromagnet 66` auf der anderen Seite. Im gewählten Beispiel der Anordnung zwischen den Kammern 41 und 42 bedeutet dies, dass der Ventilator der Kühlgasversorgungseinheit 81 an dem Elektromagneten 66 und der Ventilator der Kühlgasversorgungseinheit 82 an den Elektromagneten 66` angeschlossen ist. Fällt der Stromfluss durch die Kühlgasversorgungseinheit 81 aus, bspw. durch Leitungsunterbrechung oder Defekt des entsprechenden Ventilators, so ist in der Folge auch der Stromfluss durch den entsprechenden Elektromagnet 66 unterbrochen, wodurch der dazu gehörende schaltbare Anschlag 64 entsperrt wird und die Klappe 62 frei ist, bei Druckabfall durch die entstehende Druckdifferenz auszuschwenken und somit das Einströmen von Kühlgas aus der benachbarten Kammer mit noch laufender Kühlgasversorgungseinheit freizugeben - entsprechendes gilt bei Ausfall des Stromfluss durch die Kühlgasversorgungseinheit 82 der auf der anderen Seite angeordneten Kammer, wodurch dann auch der Stromfluss durch den Elektromagneten 66` unterbrochen ist und somit der schaltbaren Anschlag 64' entsperrt und die Klappe 62 frei ist, um bei Druckabfall in die Gegenrichtung auszuschwenken und somit das Einströmen von Kühlgas freizugeben. Damit wird auf einfache und zuverlässige Weise eine gegenseitige Absicherung benachbarter Kammern erreicht.

## Patentansprüche

1. Vorrichtung zum Kühlen von heißem Schüttgut (9), insbesondere Zementklinker, mittels eines Kühlgases (80), wobei die Vorrichtung einen eine Schicht des Schüttguts von einem Aufgabeende (31) in eine Förderrichtung (14) zu einem Abgabeende (32) fördernden Kühlrost (3) aufweist, der von einem in mehrere Kammern (41-46) unterteilten Rostunterraum (4) mit Kühlgas durchströmt ist, wobei die Kammern (41-46) in Förderrichtung (14) hintereinander angeordnet sind und die jeweils von einer eigenen zugeordneten Kühlgasversorgungseinheit (81-86) mit Kühlgas versorgt sind, wobei unmittelbar benachbarte Kammern durch eine Kammertrennwand (47) voneinander getrennt sind, wobei der Kühlrost (3) als Förderrost ausgeführt ist mit mehreren nebeneinander angeordneten, in Förderrichtung langgestreckten und in Förderrichtung wechselnd vor- und zurückbewegten Planken (34), deren Antrieb (37) so gesteuert ist, dass wenigstens zwei benachbarte Planken (34) im Vorhub gleichzeitig und im Rückhub ungleichzeitig bewegt werden,
**dadurch gekennzeichnet, dass**
bei einer Gruppe umfassend mindestens zwei Kammern zusätzlich eine Zweitversorgungseinheit (6) für Kühlgas vorgesehen ist, umfassend eine Überbrückungs-Gasführung (60), die dazu ausgebildet ist, geschlossen zu sein im Normalbetrieb bei laufender Kühlgasversorgungseinheit (81-86) und im Fehlerfall bei Ausfall der Kühlgasversorgungseinheit (81-86) von einer Kammer der Gruppe automatisch zu öffnen, so dass in diese Kammer Kühlgas der anderen Kammer oder einer der anderen Kammern der Gruppe einströmt.

2. Vorrichtung nach Anspruch 1, **dadurch gekennzeichnet, dass** die Kammern der Gruppe unmittelbar benachbart sind.

3. Vorrichtung nach einem der Ansprüche 1 oder 2, **dadurch gekennzeichnet, dass**
die Überbrückungs-Gasführung (60) kammerintern zwischen benachbarten Kammern angeordnet ist, insbesondere in deren Kammertrennwand (47).

4. Vorrichtung nach einem der vorangehenden Ansprüche,
**dadurch gekennzeichnet, dass**
die Überbrückungs-Gasführung (60`) kammerextern zwischen der Kammer und deren zugeordneter Kühlgasversorgungseinheit angeordnet ist.

5. Vorrichtung nach einem der vorangehenden Ansprüche,
**dadurch gekennzeichnet, dass**
die Überbrückungs-Gasführung (60, 60`) mittels einem Aktuator (39), insbesondere motorisch, betätigt ist.

6. Vorrichtung nach einem der Ansprüche 1 bis 4, **dadurch gekennzeichnet, dass**
die Überbrückungs-Gasführung (60, 60`) passiv betätigt ist, insbesondere durch eine Druckdifferenz zwischen den Kammern.

7. Vorrichtung nach einem der vorangehenden Ansprüche,
**dadurch gekennzeichnet, dass**
die Überbrückungs-Gasführung (60, 60`) selbsttätig schließt, insbesondere durch Feder- und/oder Gewichtskraft.

8. Vorrichtung nach einem der vorangehenden Ansprüche,
**dadurch gekennzeichnet, dass**
eine Steuereinrichtung (33) für die Überbrückungs-Gasführung (60, 60`) vorgesehen ist, die vorzugsweise Druck und/oder Temperatur an der Kammer oder Leistung der Kühlgasversorgungseinheit überwacht.

9. Vorrichtung nach einem der vorangehenden Ansprüche,
**dadurch gekennzeichnet, dass**
die Überbrückungs-Gasführung (60, 60`) selbstgesteuert ausgeführt ist, insbesondere durch Kammer-Differenzdruck gesteuert ist.

10. Vorrichtung nach einem der vorangehenden Ansprüche,
**dadurch gekennzeichnet, dass**
die Überbrückungs-Gasführung (60, 60`) ausgeführt ist als eine Klappe (62) mit mindestens einem Anschlag (63, 64), der vorzugsweise schaltbar ist in eine Entsperrstellung.

11. Vorrichtung nach dem vorangehenden Anspruch, **dadurch gekennzeichnet, dass**
zwei Anschläge (63, 64) vorgesehen sind, von denen mindestens einer schaltbar ist, vorzugsweise beide.

12. Vorrichtung nach einem der vorangehenden Ansprüche,
**dadurch gekennzeichnet, dass**
mehrere Gruppen vorgesehen sind.

13. Vorrichtung nach einem der vorangehenden Ansprüche,
**dadurch gekennzeichnet, dass**
die Überbrückungs-Gasführung (60, 60`) mit einer Rückschlagsperre ausgeführt ist, die eine Strömung des Kühlgases in einer Richtung, zu einer Öffnungsseite (61), freigibt und in entgegengesetzter Richtung, zu einer Sperrseite (61`), verschließt, wobei die Rückschlagsperre so orientiert ist, dass ihre Öffnungsseite zur Kammer mit dem höheren Soll-Betriebsdruck weist.
